# EUROPEAN PATENT APPLICATION

(11) **EP 2 485 466 A1**
(43) Date of publication of application: **08.08.2012**
(21) Application number: 10820600.4
(22) Date of filing: 29.09.2010
(51) Int. Cl.: H04M 3/42, H04M 11/00, H04W 12/06

(54) **CONTROL DEVICE AND CONTROL METHOD**

(30) Priority: 30.09.2009 JP 2009228596
(71) Applicant: NTT DOCOMO, INC., Chiyoda-ku Tokyo 100-6150 (JP)
(72) Inventor: WAKUI Michiko, Tokyo 100-6150 (JP); TAKEUCHI Nobuo, Tokyo 100-6150 (JP)
(74) Representative: Viering, Jentschura & Partner
(86) International application number: PCT/JP2010/066983
(87) International publication number: WO 2011/040485

(57) **Abstract**

The present invention is aimed at properly performing control of the functions of a mobile communication terminal using a control signal.

A control device 1 includes a control server 10 and an EIR 20. The EIR 20 is a database that stores an IMEI for identifying a mobile communication terminal 30 and an MSISDN for identifying an SIM installed in the mobile communication terminal 30 in association with each other. The control server 10 includes a control request accepting unit 11 accepting a request for function control on the mobile communication terminal 30 serving as a control target, the request including the IMEI of the mobile communication terminal 30 and the MSISDN of the SIM, a determination unit 12 determining whether the combination of the IMEI and the MSISDN included in the request for the function control is stored in the EIR 20, and a control signal transmission unit 13 transmitting a control signal for performing the function control to the mobile communication terminal 30 related to the request for the function control, depending on the determination.

## Description

### Technical Field

The present invention relates to a control device and a control method for controlling the functions of a mobile communication terminal.

### Background Art

Conventionally, a control signal is sent from a control device to a mobile communication terminal to control the functions of the mobile communication terminal. In such control, for the purpose of performing proper control, it is proposed to determine whether an IMEI (International Mobile Equipment Identifier), which is information for identifying a mobile communication terminal serving as a control target, is registered in a permission list stored in advance or the like, and then to decide whether to transmit a control signal to the mobile communication terminal depending on the determination (for example, see Patent Literature 1).

### Citation List

### Patent Literature

[Patent Literature 1] Japanese Patent Application Laid-Open Publication No. 2006-261918

### Summary of Invention

### Technical Problem

However, in the control as described above, proper control is not able to be performed in some cases as follows. The control signal is transmitted, specifically, as a message using SMS (Short Message Service). In SMS, a message is transmitted to a subscriber authentication module such as an SIM (Subscriber Identity Module) or a UIM (User Identity Module) installed in a mobile communication terminal main unit. Therefore, when the subscriber authentication module is changed, the control signal may not be transmitted to the mobile communication terminal with the IMEI of a control target but may be transmitted to a mobile communication terminal with a different IMEI In this case, control is not performed on the proper mobile communication terminal, and moreover, if the mobile communication terminal to which the control signal is transmitted does not have the ability to execute control related to the control signal, the control signal may cause an error in the mobile communication terminal.

When transmission of a control signal is requested from a mobile communication terminal, if a subscriber authentication module is changed, or if the IMEI transmitted from a mobile communication terminal such as an open platform terminal, which can rewrite software freely, is faked, control by a control signal may not be performed correctly on the desired mobile communication terminal.

The present invention is made to solve the aforementioned problem and aims to provide a control device and a control method capable of properly performing control of the functions of a mobile communication terminal using a control signal.

### Solution to Problem

In order to solve the problem above, a control device according to the present invention includes a database storing terminal information for identifying a mobile communication terminal and module information for identifying a subscriber authentication module installed in a mobile communication terminal in association with each other, control request accepting means for accepting a request for function control on a mobile communication terminal serving as a control target, the request including the terminal information of the mobile communication terminal and the module information of the subscriber authentication module, determination means for determining whether a combination of the terminal information and the module information included in the request for the function control accepted by the control request accepting means is stored in the database, and control signal transmission means for transmitting a control signal for performing the function control to the mobile communication terminal related to the request for the function control accepted by the control request accepting means, depending on a determination by the determination means. The function control on the mobile communication terminal includes performing function control on the subscriber authentication module installed in the mobile communication terminal.

In the control device according to the present invention, function control on a mobile communication terminal is not determined only by one of the terminal information and the module information but is determined based on both of the terminal information and the module information. Therefore, transmission of a control signal to a wrong mobile communication terminal can be prevented. When compared with a case where determination of function control is made based on only the terminal information or the module information, control by a control signal can be performed more properly even if information is faked when transmission of a control signal is requested from a mobile communication terminal. The control device according to the present invention can properly perform control of the functions of a mobile communication terminal using a control signal.

Preferably, the database stores information related to location registration of a mobile communication terminal as information associated with the terminal information and the module information. In this configuration, the terminal information and the module information stored in the database is related to the mobile communication terminal permitted to be present within the area of the mobile communication network. Therefore, the control signal can be reliably transmitted to the mobile communication terminal, and control of the functions of the mobile communication terminal by the control signal can be performed even more properly.

Preferably, when determining that a combination of the terminal information and the module information included in the request for the function control accepted by the control request accepting means is not stored in the database, the determination means stores the combination of the terminal information and the module information, and determines again whether the combination of the terminal information and the module information is stored in the database. With this configuration, even when the terminal information and the module information are not so combined as to allow function control to be performed at a time when a request for function control is accepted, control of the functions of a mobile communication terminal by a control signal can be performed, for example, when the terminal information and the module information are so combined as to allow function control to be performed.

Preferably, the determination means stores information indicating ability of a mobile communication terminal in association with the terminal information in advance, and further determines whether the mobile communication terminal related to the request for the function control has the ability to execute function control, based on the terminal information included in the request for the function control. With this configuration, transmission of an unnecessary control signal can be prevented. It is also possible to prevent an error in a mobile communication terminal due to transmission of a control signal to a mobile communication terminal that is unable to execute function control.

The present invention can be described as the invention of the control device as described above and can also be described as the invention of a control method as follows. These inventions belong to different categories but are substantially the same and achieve the similar effects and operations.

Specifically, a control method according to the invention is performed by a control device that includes a database storing terminal information for identifying a mobile communication terminal and module information for identifying a subscriber authentication module installed in a mobile communication terminal in association with each other. The control method includes the steps of accepting a control request for accepting a request for function control on a mobile communication terminal serving as a control target, the request including the terminal information of the mobile communication terminal and the module information of the subscriber authentication module, determining whether a combination of the terminal information and the module information included in the request for the function control accepted in the step of accepting the control request is stored in the database, and transmitting a control signal for performing the function control to the mobile communication terminal related to the request for the function control accepted in the step of accepting the control request, depending on a determination in the step of determining.

### Advantageous Effects of Invention

According to the present invention, transmission of a control signal to a wrong mobile communication terminal can be prevented, and when compared with a case where determination of function control is made only based on terminal information or module information, control by a control signal can be performed more properly even if information is faked when transmission of a control signal is requested from a mobile communication terminal. The present invention can properly perform control of the functions of a mobile communication terminal using a control signal.

### Brief Description of Drawings

FIG 1 is a diagram illustrating a functional configuration of a control device according to an embodiment of the present invention.
FIG 2 is a table showing information stored in a database that holds information indicating association (linkage) between terminal information and module information.
FIG. 3 is another example of the table showing information stored in the database that holds information indicating association (linkage) between terminal information and module information.
FIG 4 is yet another example of the table showing information stored in the database that holds information indicating association (linkage) between terminal information and module information.
FIG. 5 is a diagram illustrating a hardware configuration of a control server that configures the control device according to the embodiment of the present invention.
FIG. 6 is a sequence diagram illustrating a process (control method) executed in the control device according to the embodiment of the present invention.
FIG. 7 is a sequence diagram illustrating another example of a process (control method) executed in the control device according to the embodiment of the present invention.
FIG. 8 is a sequence diagram illustrating yet another example of a process (control method) executed in the control device according to the embodiment of the present invention.

### Description of Embodiments

In the following, preferred embodiments of a control device and a control method according to the present invention will be described in detail in conjunction with drawings. It is noted that in the description of the drawings, the same components are denoted with the same reference numerals, and an overlapping description will be omitted.

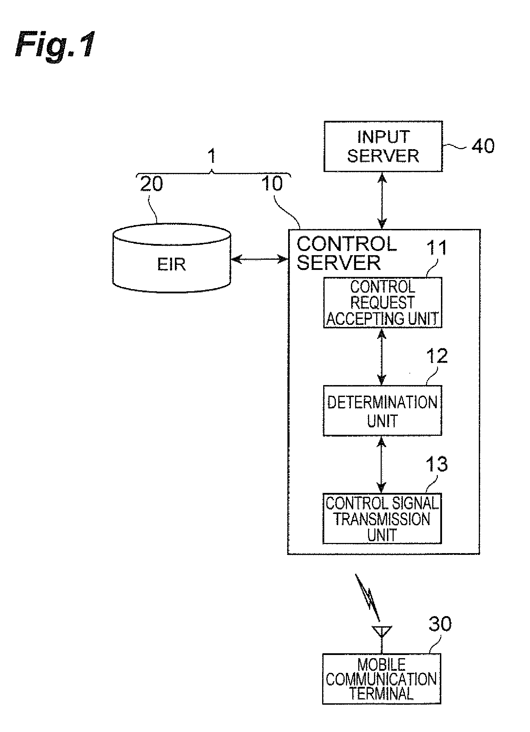

FIG 1 illustrates a control device 1 according to an embodiment of the present invention. The control device 1 is a device that controls the functions of a mobile communication terminal (mobile device) 30 and includes a control server 10 and a database, for example, an EIR (Equipment Identity Register) 20 for holding information indicating association (linkage) between terminal information and module information. The control server 10 is a device that executes control of the functions of the mobile communication terminal 30 and, for example, corresponds to a device management server defined by OMA (Open Mobile Alliance). The EIR 20 is a device that stores information for executing control of the functions of the mobile communication terminal 30. The control server 10 and the EIR 20 are connected through wires or the like to mutually transmit/receive information. The control server 10 can transmit/receive information to/from the mobile communication terminal 30 through a mobile communication network (not illustrated). The control server 10 is connected to an input server 40 through a wired or wireless communication network to transmit/receive information.

The mobile communication terminal 30 is a device connected to the mobile communication network to perform mobile communication. The mobile communication terminal 30 functions as a mobile communication terminal with an SIM as a subscriber authentication module inserted into the mobile communication terminal 30. The SIM stores module information for identifying the SIM itself Specifically, the module information is an MSISDN (Mobile Subscriber ISDN Number). In the mobile communication network, the MSISDN is used to perform communication processing such as incoming/outgoing calls by the mobile communication terminal 30. Meanwhile, terminal information for identifying the mobile communication terminal 30 is set and stored in the mobile communication terminal 30 (main unit). Specifically, the terminal information is an IMEI.

The mobile communication terminal 30 performs location registration with the mobile communication network when connecting to the mobile communication network for communication. The location registration is a process of registering a communication area in which the mobile communication terminal 30 is located with the mobile communication network. As a result of location registration by the mobile communication terminal 30, information indicating association (linkage) between the MSISDN and the IMEI related to the terminal 30 itself is registered in the mobile communication network. The MSISDN and the IMEI related to the mobile communication terminal 30 whose location has been registered are stored in association with each other in the EIR 20. In other words, the EIR 20 is a database that stores the IMEI for identifying the mobile communication terminal 30 and the MSISDN for identifying the SIM installed in the mobile communication terminal 3 0 in association with each other.

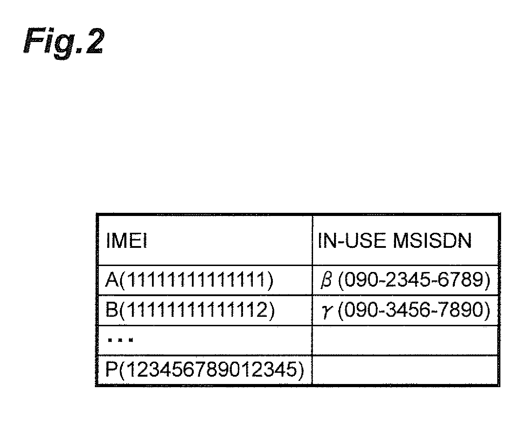

Specifically, the EIR 20 stores the MSISDN (in-use MSISDN) and the IMEI in association with each other in a table shown in FIG 2. The EIR 20 registers the IMEI as key information in advance and newly stores the MSISDN of the SIM installed in the main unit of the mobile communication terminal 30 related to the IMEI in association with the IMEI when the location of the mobile communication terminal 30 is registered. When the SIM inserted in the mobile communication terminal 30 is removed and inserted into another mobile communication terminal 30, the EIR 20 updates the stored MSISDN. The database to store the IMEI and the MSISDN associated with each other may not necessarily use the IMEI as key information but may use the MSISDN as key information.

The mobile communication terminal 30 serves as a target of function control by the control device 1 as described above. The function control is performed based on a request from a device such as the input server 40 other than the mobile communication terminal 30 serving as a control target, or is performed based on a request from the mobile communication terminal 30 itself serving as a control target. Specific contents of the control include device management standardized by OMA or the like, for example, remote initialization, remote function restriction, and remote software update. SIM function restriction on the SIM is also included. The processing related to the control will be described in more detail later.

The input server 40 is a device used to input information indicating function control on the mobile communication terminal 30 by the user. Specifically, the input server 40 corresponds to a dedicated terminal managed by a carrier providing a mobile communication network or a general terminal such as a PC (Personal Computer).

When a request for function control of the mobile communication terminal 30 is made to the control device 1 (the control server 10 thereof) as described later, the MSISDN and the IMEI of the mobile communication terminal 30 serving as a control target are included in the request.

The control server 10 according to the present embodiment will now be described in more detail. As illustrated in FIG 1, the control server 10 includes a control request accepting unit 11, a determination unit 12, and a control signal transmission unit 13.

The control request accepting unit 11 is control request accepting means for accepting a request for function control on the mobile communication terminal 30, the request including the IMEI of the mobile communication terminal 30 as a control target and the MSISDN of the SIM. The request also includes information indicating control content. Specifically, the control request accepting unit 11 receives a signal related to the request transmitted from the mobile communication terminal 30 or the input server 40. The control request accepting unit 11 outputs information related to the accepted request for function control to the determination unit 12.

The determination unit 12 is determination means for determining whether the combination of the IMEI and the MSISDN included in the request for the function control accepted by the control request accepting unit 11 is stored in the EIR 20. Depending on this determination, whether to carry out the function control is determined. Specifically, the determination unit 12 inquires of the EIR 20 about the IMEI corresponding to the MSISDN included in the request for the function control. The EIR 20 acquires the IMEI corresponding to the MSISDN related to the inquiry from the table shown in FIG 2 and transmits the acquired IMEI to the control server 10. The determination unit 12 receives the IMEI transmitted from the EIR 20 and determines whether the received IMEI agrees with the IMEI included in the request for the function control. In the example of the table held by the EIR 20 shown in FIG 2, the IMEI is the key information. However, when the IMEI is acquired as described above, it is desirable to configure the table having the MSISDN as key information. The determination by the determination unit 12 may be performed as follows. The determination unit 12 inquires of the EIR 20 about the MSISDN corresponding to the IMEI included in the request for the function control. The EIR 20 acquires the MSISDN corresponding to the IMEI related to the inquiry from the table shown in FIG 2 and transmits the acquired MSISDN to the control server 10. The determination unit 12 receives the MSISDN transmitted from the EIR 20 and determines whether the received MSISDN agrees with the MSISDN included in the request for the function control.

If it is determined that they agree, the determination unit 12 determines that the combination of the IMEI and the MSISDN included in the request for the function control is stored in the EIR 20. If it is determined that they do not agree, the determination unit 12 determines that the combination of the IMEI and the MSISDN included in the request for the function control is not stored in the EIR 20. If the MSISDN related to the inquiry is not stored in the EIR 20 and the IMEI corresponding to the MSISDN cannot be acquired, a notification as such is sent from the EIR 20 to the control server 10. Upon receiving the notification, the determination unit 12 determines that the combination of the IMEI and the MSISDN included in the request for the function control is not stored in the EIR 20.

After it is determined that the combination of the IMEI and the MSISDN included in the request for the function control is stored in the EIR 20, the determination unit 12 outputs information related to the request for the function control to the control signal transmission unit 13 in order to carry out function control. After it is determined that the combination of the IMEI and the MSISDN included in the request for the function control is not stored in the EIR 20, the determination unit 12 does not allow function control.

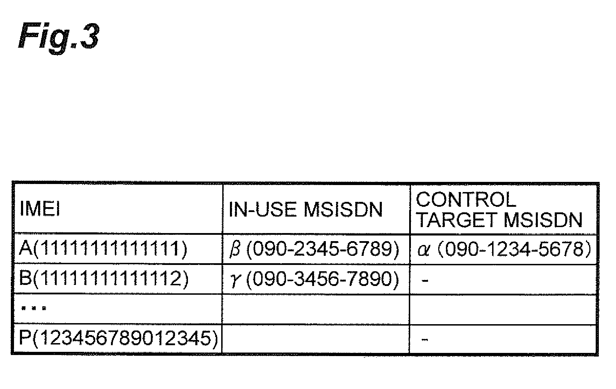

After it is determined that the combination of the IMEI and the MSISDN included in the request for the function control is not stored in the EIR 20, the determination unit 12 may store the combination of the IMEI and the MSISDN included in the request for the function control and determine again whether this combination is stored in the EIR 20. Specifically, as for storage of the combination of the IMEI and the MSISDN included in the request for the function control, the determination unit 12 stores (registers) the information into the EIR 20. Specifically, first, as shown in the table in FIG 3, in the table for the EIR 20 to store the combination of the IMEI and the MSISDN, a field in which the MSISDN of a control target (control target MSISDN) is stored is provided for the combination in advance.

Then, the determination unit 12 inquires of the EIR 20 about the in-use MSISDN and the control target MSISDN associated with the IMEI and determines whether they agree at a prescribed timing. If it is determined that they agree, the determination unit 12 determines that the combination of the IMEI and the MSISDN included in the request for the function control is stored in the EIR 20. If it is determined that they do not agree, the determination unit 12 determines that the combination of the IMEI and the MSISDN included in the request for the function control is not stored in the EIR 20.

The timing of determining whether the in-use MSISDN and the control target MSISDN agree is, for example, after the mobile communication terminal 30 identified by the IMEI associated with them newly performs location registration. This is because there is a possibility that the in-use MSISDN is updated after the mobile communication terminal 30 newly performs location registration. For this reason, the determination unit 12 is preliminarily set such that it can detect that the mobile communication terminal 30 newly performs location registration. For example, a notification that the mobile communication terminal 30 newly performs location registration may be sent from the mobile communication network to the control server 10. Besides the above, whether the in-use MSISDN and the control target MSISDN agree may be determined at regular intervals.

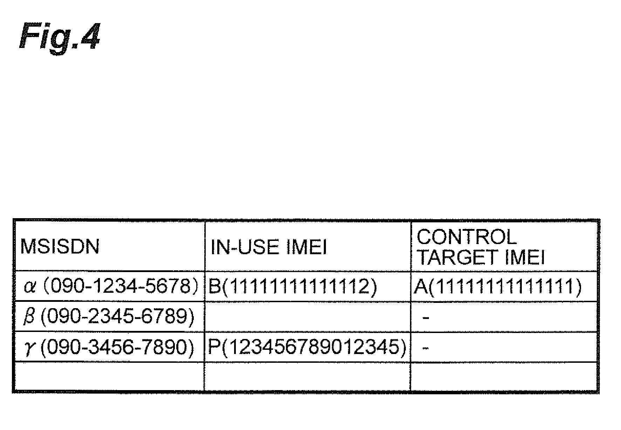

In the description above, as the information stored in the EIR 20, the in-use MSISDN and the control target MSISDN are associated with the IMEI as shown in FIG 3. However, as shown in FIG 4, the in-use IMEI (the IMEI of the mobile communication terminal 30 whose location is registered) and the control target IMEI (the IMEI of a control target) may be associated with the MSISDN and stored. This manner is desirable in a case where information stored using the MSISDN as key information, such as HLR (Home Location Register), is used as a database that stores the IMEI and the MSISDN in association with each other.

In addition to the determinations described above, the determination unit 12 may determine whether the mobile communication terminal 30 (main unit) has the ability to execute function control, based on the IMEI, and, only when determining that the mobile communication terminal 30 has the ability, may input information related to the request for the function control to the control signal transmission unit 13. Specifically, the control server 10 (the determination unit 12 thereof) holds an ability database in advance in which information indicating the ability of the mobile communication terminal 30 (main unit) identified by the IMEI is association with the IMEI and stored. The determination unit 12 acquires the information indicating the ability of the mobile communication terminal 30 (main unit) identified by the IMEI that is stored in the ability database, based on the IMEI included in the request for the function control, and determines whether the mobile communication terminal 30 is able to execute the control content included in the request for the function control. Thus, the control signal can be transmitted only to the mobile communication terminal 30 that is able to execute the function control, thereby preventing transmission of an unnecessary control signal. It is also possible to prevent an error in the mobile communication terminal 30 due to transmission of a control signal to the mobile communication terminal 30 that is unable to execute the function control.

It may be determined whether not only the mobile communication terminal 30 (main unit) but also the SIM has the ability to execute the function control in a similar manner as described above, and only when determining that the SIM has the ability, information related to the request for the function control may be input to the control signal transmission unit 13.

In the case where a device such as the input server 40 other than the mobile communication terminal 30 makes a request for function control on the mobile communication terminal 30, in addition to the determination above, the determination unit 12 may determine whether the combination of the IMEI and the MSISDN included in the request for the function control agrees with the combination of the IMEI of the mobile communication terminal 30 and the MSISDN transmitted from the mobile communication terminal 30. Here, the combination of the IMEI and the MSISDN transmitted from the mobile communication terminal 30 corresponds to information transmitted from the mobile communication terminal 30 to the control server 10 when connection for terminal control is established when a control signal is transmitted by the control signal transmission unit 13 described later. If the determination above shows agreement, the determination unit 12 allows the control signal transmission unit 13 to transmit a control signal to the mobile communication terminal 30. If the determination above shows disagreement, the determination unit 12 prohibits transmission of a control signal to the mobile communication terminal 30 by the control signal transmission unit 13. The additional determination like this prevents an error and increases security. However, when information is transmitted using SMS or the like to the mobile communication terminal 30 (the SIM thereof) identified by the MSISDN when connection for terminal control is established between the control server 10 and the mobile communication terminal 30 as described later, the information transmitted from the mobile communication terminal 30 to the control server 10 when the process above is performed may only include the IMEI of the mobile communication terminal 30 (the MSISDN may not necessarily be transmitted). This is because in the case above, the IMEI is transmitted from the mobile communication terminal 30 in response to the transmission of the information to the MSISDN from the control server 10. In other words, the MSISDN can be identified in the control server 10 even if the MSISDN is not transmitted from the mobile communication terminal 30. The association between the information transmitted from the control server 10 to the mobile communication terminal 30 and the information transmitted from the mobile communication terminal 30 to the control server 10 is performed by a sequence number (indicating control content) included in each piece of information.

The control signal transmission unit 13 is control signal transmission means for transmitting a control signal for performing the function control to the mobile communication terminal 30 related to the request for the function control accepted by the control request accepting unit 11, depending on the determination by the determination unit 12. The control signal transmission unit 13 transmits a control signal after the information related to the request for the function control is input from the determination unit 12 as described above. Specifically, the control signal transmission unit 13 first inquires of the mobile communication terminal 30 identified by the MSISDN included in the request for the function control as to whether connection for terminal control is allowed between the control server 10 and the mobile communication terminal 30, using means such as SMS, and transmits a message for establishing connection. Whether connection for terminal control is allowed between the control server 10 and the mobile communication terminal 30 is determined and connection is established. After that, a control signal in accordance with the information indicating the control content included in the request for the function control is generated and transmitted using the connection. The mobile communication terminal 30 receives the control signal and executes control in accordance with the control signal.

The mobile communication terminal 30 may transmit the IMEI and the MSISDN of the terminal 30 itself to the control server 10 when connection for terminal control is established between the control server 10 and the mobile communication terminal 30. These IMEI and MSISDN) are used in the determination by the determination unit 12 described above. These pieces of information may be transmitted/received as information for use in authentication of the mobile communication terminal 30 in the control server 10 when whether terminal control is allowed between the control server 10 and the mobile communication terminal 30 is determined.

By contrast, in the case where a request for function control is made from the mobile communication terminal 30, in general, connection for packet communication (connection for terminal control) has been established (the connection is used to transmit a signal related to the control request from the mobile communication terminal 30 to the control server 10). Therefore, the process of establishing the connection for packet communication (connection for terminal control) is not always required. This is the functional configuration of the control server 10.

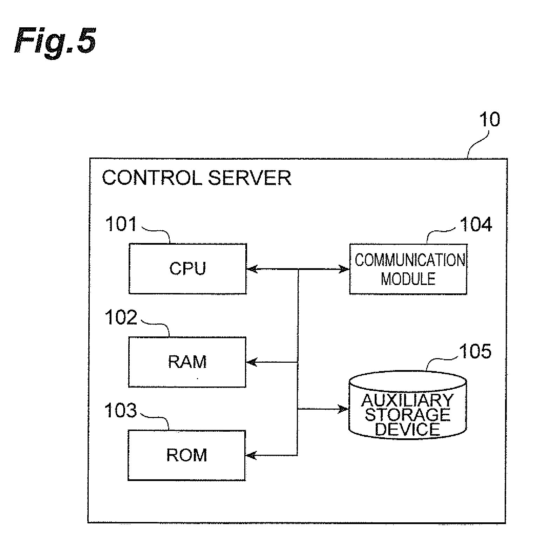

FIG 5 illustrates a hardware configuration of the control server 10. As illustrated in FIG 5, the control server 10 includes a computer having hardware such as a CPU (Central Processing Unit) 101, a RAM (Random Access Memory) 102 and a ROM (Read Only Memory) 103 that are main storage devices, a communication module 104 for communication, and an auxiliary storage device 105 such as a hard disk. These components are operated with a computer program or the like, whereby the functions of the control server 10 described above are performed. The EIR 20 is also implemented with a hardware configuration similar to that of the control server 10. This is the configuration of the control server 10.

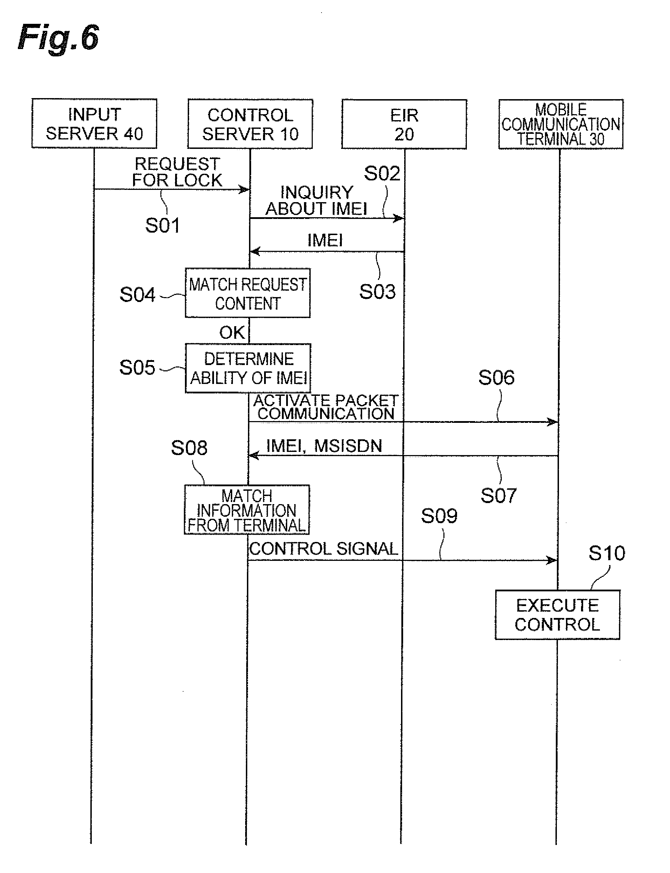

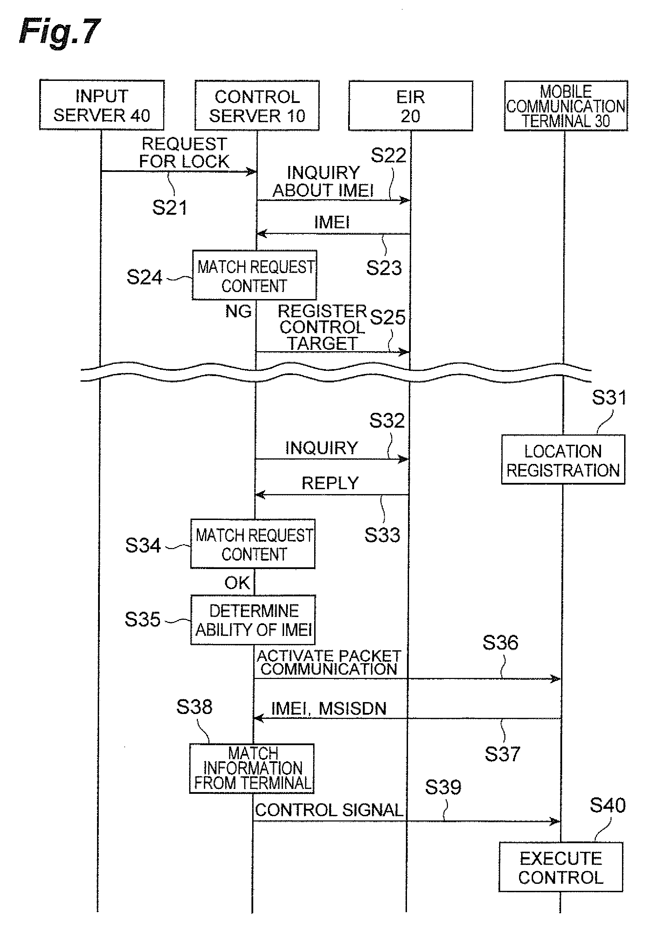

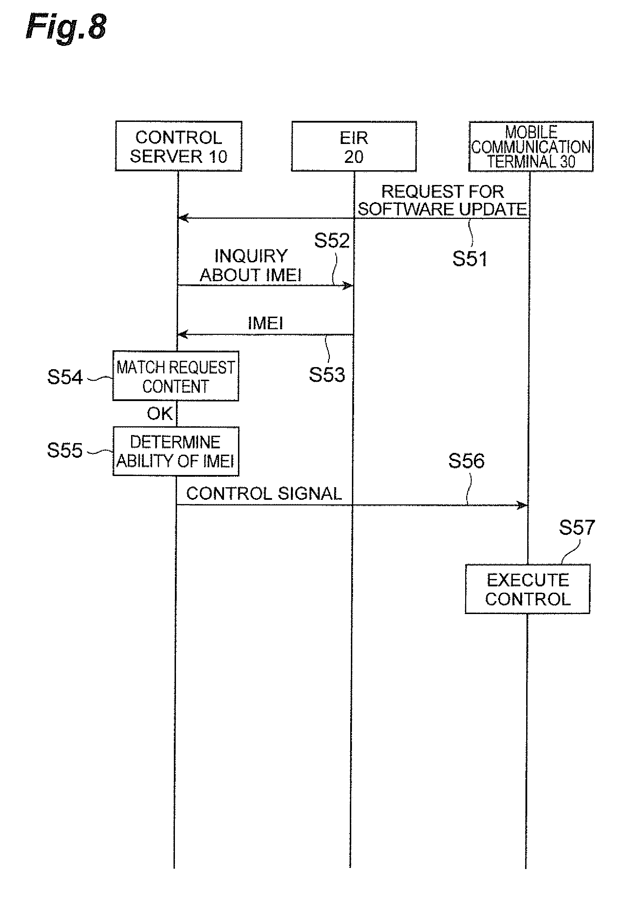

Next, a process (control method) executed by the control device 1 according to the present embodiment will be described using the sequence diagrams in FIG 6 to FIG 8. First, FIG 6 and FIG 7 are used to describe the case where a request for function control is made from the input server 40 that is a device other than the mobile communication terminal 30 serving as a control target. Then, FIG 8 is used to describe the case where a request for function control is made from the mobile communication terminal 30 serving as a control target.

As illustrated in FIG 6, first, a signal related to a request for function control on the mobile communication terminal 30 is transmitted from the input server 40 to the control server 10. In this example of the process, the function control on the mobile communication terminal 30 is remote function restriction that disables the use of the functions of the mobile communication terminal 30. This is, for example, a process of preventing unauthorized use of the mobile communication terminal 30 by a third person when the owner of the mobile communication terminal 30 lost the mobile communication terminal 30. As described above, the request for the function control includes the IMEI of the mobile communication terminal 30 as a control target, the MSISDN of the SIM, and information indicating control content, which are input at the input server 40.

In the control server 10, the control request accepting unit 11 receives the signal related to a request for function control (S01, the step of accepting the control request). Each piece of information included in the signal related to the request for the function control is output from the control request accepting unit 11 to the determination unit 12.

Then, the determination unit 12 inquires of the EIR 20 about the IMEI corresponding to the MSISDN included in the request for the function control (S02, the step of determining). The EIR 20 acquires the IMEI corresponding to the MSISDN related to the inquiry from the information stored in the EIR 20 and transmits the IMEI to the control server 10. In the control server 10, the determination unit 12 receives the IMEI transmitted from the EIR 20 (S03, the step of determining).

Then, the determination unit 12 determines whether the IMEI transmitted from the EIR 20 agrees with the IMEI included in the request for the function control (S04, the step of determining). If it is determined that the two IMEIs do not agree, the function control is not carried out, and the process ends (not illustrated). In this case, information (NG reply) indicating that the function control is not carried out may be transmitted from the control server 10 to the input server 40 (the same shall apply below in the case where the function control is not carried out).

If it is determined that the two IMEIs agree, the determination unit 12 further determines whether the mobile communication terminal 30 (main unit) has the ability to execute the function control, based on the IMEI (S05, the step of determining). If it is determined in the determination by the determination unit 12 that the mobile communication terminal 30 (main unit) has the ability, the information related to the request for the function control is output from the determination unit 12 to the control signal transmission unit 13 in order to carry out the function control. If it is determined in the determination by the determination unit 12 that the mobile communication terminal 30 (main unit) does not have the ability, the function control is not carried out, and the process ends (not illustrated).

Next, when the information related to the request for the function control is input from the determination unit 12 to the control signal transmission unit 13, a message for establishing connection for packet communication between the control server 10 and the mobile communication terminal 30 is transmitted from the control signal transmission unit 13 to the mobile communication terminal 3 0 identified by the MSISDN included in the request for the function control (S06, the step of transmitting the control signal). The mobile communication terminal 30 receives the message and transmits a reply thereto to the control server 10. The IMEI of the terminal 30 itself and the MSISDN of the SIM installed in the terminal 30 itself are included in the reply. In the control server 10, the control signal transmission unit 13 receives the reply, and connection between the control server 10 and the mobile communication terminal 30 is permitted (established) (S07, the step of transmitting the control signal).

Next, the IMEI and the MSISDN included in the reply transmitted from the mobile communication terminal 30 are output from the control signal transmission unit 13 to the determination unit 12. Then, the determination unit 12 determines whether the combination of the IMEI and the MSISDN included in the request for the function control agrees with the combination of the IMEI of the mobile communication terminal 30 and the MSISDN transmitted from the mobile communication terminal 30 (step S08, the step of determining). If it is determined that these combinations do not agree, the function control is not carried out, and the process ends (not illustrated).

If it is determined that these combinations agree, control is performed such that the determination unit 12 allows the control signal transmission unit 13 to transmit a control signal to the mobile communication terminal 30. Then, the control signal transmission unit 13 generates a control signal in accordance with the information indicating the control content included in the request for the function control and transmits the control signal to the mobile communication terminal 30 (S09, the step of transmitting the control signal). The mobile communication terminal 30 receives the control signal and executes control in accordance with the control signal (S10). Specifically, control of remote function restriction to disable the use of the functions of the mobile communication terminal 30 is executed. This is a process from when a request for function control is made from the input server 40 to when control of the mobile communication terminal 30 is executed.

In S04 in the process above, if the IMEI transmitted from the EIR 20 and the IMEI included in the request for the function control do not agree (if it is determined that the combination of the IMEI and the MSISDN included in the request for the function control is not stored in the EIR 20), the function control is not carried out, and the process ends. In the example described below, if the IMEI transmitted from the EIR 20 and the IMEI included in the request for the function control do not agree, the determination may be performed again at a latter timing as follows. The process in such a case will be described using the sequence diagram in FIG 7. The case where the IMEI transmitted from the EIR 20 and the IMEI included in the request for the function control do not agree includes a case where a SIM is not inserted in the mobile communication terminal 30 and a case where even when a SIM is inserted in the mobile communication terminal 30, the IMEI of the mobile communication terminal 30 and the MSISDN of the SIM installed in the mobile communication terminal 30 differ from the IMEI and the MSISDN included in the request for the function control.

The process through S21 to S24 in FIG 7 is similar to the process through S01 to S04 in FIG. 6. More specifically, first, a signal related to a request for function control on the mobile communication terminal 30 is transmitted from the input server 40 to the control server 10. In the control server 10, the control request accepting unit 11 receives the signal related to the request for the function control (S21, the step of accepting the control request). Then, the determination unit 12 inquires of the EIR about the IMEI corresponding to the MSISDN included in the request for the function control (S22, the step of determining). The EIR 20 acquires the IMEI corresponding to the MSISDN related to the inquiry from the information stored in the EIR 20 and transmits the IMEI to the control server 10. In the control server 10, the determination unit 12 receives the IMEI transmitted from the EIR 20 (S23, the step of determining).

Next, the determination unit 12 determines whether the IMEI transmitted from the EIR 20 agrees with the IMEI included in the request for the function control (S24, the step of determining). If it is determined that the two IMEIs do not agree, information indicating the combination of the IMEI and the MSISDN included in the request for the function control is transmitted from the determination unit 12 to the EIR 20. The EIR 20 receives the combination of the IMEI and the MSISDN and stores the received MSISDN (control target MSISDN) associated with the received IMEI stored in the EIR 20 in advance (S25, the step of determining). Here, the process between the control server 10 and the EIR 20 temporarily suspends.

Thereafter, the mobile communication terminal 30 newly performs location registration. As a result, the EIR 20 stores the MSISDN (in-use MSISDN) associated with the IMEI of the mobile communication terminal 30 therein (S31). The location registration of the mobile communication terminal 30 is performed after the user installs an SIM in the mobile communication terminal 30 and the mobile communication terminal 30 is positioned in the communication area of the mobile communication network.

In the control server 10, it is detected that the mobile communication terminal 30 performs location registration, which triggers the determination unit 12 to make an inquiry to the EIR 20 about the in-use MSISDN and the control target MSISDN associated with the IMEI of the mobile communication terminal. 30 (S32, the step of determining). The EIR 20 transmits the in-use MSISDN and the control target MSISDN to the control server 10 as a reply to the inquiry (S33, the step of determining). The determination unit 12 receives the in-use MSISDN and the control target MSISDN and determines whether they agree (S34, the step of determining).

If it is determined that they do not agree, it is determined that the combination of the IMEI and the MSISDN included in the request for the function control is not stored in the EIR 20 (not illustrated). In this case, the process is suspended until the mobile communication terminal 30 newly performs location registration in a similar manner as above.

If it is determined that they agree, it is determined that the combination of the IMEI and the MSISDN included in the request for the function control is stored in the EIR 20. In this case, a similar process as the process on and after S05 in FIG 6 is subsequently performed. Specifically, the determination unit 12 further determines whether the mobile communication terminal 30 (main unit) has the ability to execute function control, based on the IMEI (S35, the step of determining). If it is determined in the determination by the determination unit 12 that the mobile communication terminal 30 (main unit) has the ability, information related to the request for the function control is output from the determination unit 12 to the control signal transmission unit 13 in order to carry out the function control.

Next, when the information related to the request for the function control is input from the determination unit 12 to the control signal transmission unit 13, a message for confirming whether terminal control is permitted between the control server 10 and the mobile communication terminal 30 is transmitted from the control signal transmission unit 13 to the mobile communication terminal 30 identified by the MSISDN) included in the request for the function control (S36, the step of transmitting the control signal). The mobile communication terminal 30 receives the message and transmits a reply thereto to the control server 10. The IMEI of the terminal 30 itself and the MSISDN) of the SIM installed in the terminal 30 itself are included in the reply. In the control server 10, the control signal transmission unit 13 receives the reply, and connection between the control server 10 and the mobile communication terminal 30 is established (S37, the step of transmitting the control signal).

Next, the IMEI and the MSISDN included in the reply transmitted from the mobile communication terminal 30 are output from the control signal transmission unit 13 to the determination unit 12. Then, the determination unit 12 determines whether the combination of the IMEI and the MSISDN included in the request for the function control agrees with the combination of the IMEI of the mobile communication terminal 30 and the MSISDN transmitted from the mobile communication terminal 30 (S38, the step of determining).

If it is determined that these combinations agree, control is performed such that the determination unit 12 allows the control signal transmission unit 13 to transmit a control signal for the mobile communication terminal 30. Then, the control signal transmission unit 13 generates a control signal in accordance with the information indicating the control content included in the request for the function control and transmits the control signal to the mobile communication terminal 30 (S39, the step of transmitting the control signal). The mobile communication terminal 30 receives the control signal and executes control in accordance with the control signal (S40). Specifically, control of remote function control to disable the use of the functions of the mobile communication terminal 30 is executed. This is an example of the process in the case where the IMEI transmitted from the EIR 20 and the IMEI included in the request for the function control do not agree.

Next, the case where a request for function control is made from the mobile communication terminal 30 as a control target will be described using FIG 8. As illustrated in FIG 8, first, a signal related to a request for function control on the mobile communication terminal 30 is transmitted from the mobile communication terminal 30 to the control server 10. In this example of the process, the function control on the mobile communication terminal 30 is update of software stored in the mobile communication terminal 30. This process is triggered, for example, by the user's operation when the mobile communication network notifies the mobile communication terminal 30 of update of software. As described above, the request for the function control includes the IMEI of the mobile communication terminal 30, the MSISDN of the SIM, and information indicating control content. When a signal related to a request for function control is transmitted from the mobile communication terminal 30 to the control server 10, connection for packet communication has been established in advance between the control server 10 and the mobile communication terminal 30.

In the control server 10, the control request accepting unit 11 receives the signal related to the request for the function control (S51, the step of accepting the control request). Each piece of information included in the signal related to the request for the function control is output from the control request accepting unit 11 to the determination unit 12.

Next, the determination unit 12 inquires of the EIR 20 about the IMEI corresponding to the MSISDN included in the request for the function control (S52, the step of determining). The EIR 20 acquires the IMEI corresponding to the MSISDN related to the inquiry from the information stored in the EIR 20 and then transmits the IMEI to the control server 10. In the control server 10, the determination unit 12 receives the IMEI transmitted from the EIR 20 (S53, the step of determining).

Next, the determination unit 12 determines whether the IMEI transmitted from the EIR 20 agrees with the IMEI included in the request for the function control (S54, the step of determining). If it is determined that the two IMEIs do not agree, the function control is not carried out, and the process ends (not illustrated). In this case, information (NG reply) indicating that the function control is not carried out may be transmitted from the control server 10 to the mobile communication terminal 3 0.

If it is determined that the two IMEIs agree, the determination unit 12 further determines whether the mobile communication terminal 30 (main unit) has the ability to execute the function control, based on the IMEI (S55, the step of determining). If it is determined in the determination by the determination unit 12 that the mobile communication terminal 30 (main unit) has the ability, the information related to the request for the function control is output from the determination unit 12 to the control signal transmission unit 13 in order to carry out the function control. If it is determined in the determination by the determination unit 12 that the mobile communication terminal 30 (main unit) does not have the ability, the function control is not carried out, and the process ends (not illustrated).

Next, when the information related to the request for the function control is input from the determination unit 12 to the control signal transmission unit 13, a control signal in accordance with the information indicating the control content included in the request for the function control is generated and transmitted to the mobile communication terminal 30 by the control signal transmission unit 13 (S56, the step of transmitting the control signal). In the case of this process, unlike the foregoing process, connection for packet communication has been established between the control server 10 and the mobile communication terminal 30, and therefore, the process for establishing the connection is unnecessary. The mobile communication terminal 30 receives the control signal and executes control in accordance with the control signal (S57). Specifically, the control signal includes software for update, so that update of the software is executed. This is the process from when a request for function control is made from the mobile communication terminal 30 as a control target and to when control on the mobile communication terminal 30 is executed.

As described above, according to the present embodiment, function control on the mobile communication terminal 30 is determined based on not only one of the IMEI and the MSISDN but also both of the IMEI and the MSISDN. Therefore, it is possible to prevent transmission of a control signal to a wrong mobile communication terminal 30 (a mobile communication terminal 30 to which a control signal is originally not intended to be transmitted). Accordingly, an unnecessary signal on the mobile communication network and an unnecessary process in the mobile communication terminal 30 can be prevented. In addition, an error in the mobile communication terminal 30 due to a control signal can be prevented.

In a case where the mobile communication terminal 30 is an OPF (Open Platform) terminal or the like, for example, the IMEI or the MSISDN generated with terminal software, which is transmitted from the mobile communication terminal 30 when function control is carried out, may be set freely or faked. Even if the information is faked in this manner, control by a control signal can be performed properly, for example, in such a manner that function control is prohibited in the case of fake whereas function control is executed in the case of not fake, because it is more difficult to properly fake both the IMEI and the MSISDN when compared with when the determination of function control is made based on only the IMEI. Accordingly, wrong billing to the user, wrong transmission of a control signal over the mobile communication network, and the like can be prevented.

As measures against fraud, key information used between the mobile communication terminal 30 and the control server 10 may be provided separately and updated for each process, or encryption or hashing technique may be used. However, the load on the mobile communication terminal 30 increases as the mechanism is more complicated. In the present embodiment, measured against fraud are implemented without burdening the mobile communication terminal 30.

Furthermore, it is possible to prevent function control on a mobile communication terminal 30 that is not the mobile communication terminal 30 as a control target, which is caused not by faking an IMEI but by changing between mobile communication terminals 30. In short, the present embodiment can properly perform control of the functions of the mobile communication terminal 30 using a control signal.

It is desirable to make a determination as to whether execution of function control is allowed using information related to location registration as in the present embodiment. In this configuration, the IMEI and the MSISDN stored in the EIR 20 is related to the mobile communication terminal present within the area of the mobile communication network. Therefore, a control signal can be reliably transmitted to the mobile communication terminal 30, and control of the functions of the mobile communication terminal 30 using a control signal can be performed more properly. It is less likely to fake an IMEI and an MSISDN during location registration than to fake an IMEI and an MSISDN when function control is carried out. Therefore, this configuration is also effective in terms of measures against fraud. It is not always necessary to use the information related to location registration, but, for example, information registered in the database in advance may be used.

Even when it is determined that the information included in the request for the function control is not stored in the database as described above, it is desirable that the determination should be made again as in the process illustrated in FIG. 7. With this configuration, control of the functions of the mobile communication terminal by a control signal can be performed when the IMEI and the MSISDN are so combined as to allow function control to be performed reliably.

It is also desirable that the determination as to whether to execute function control should be made based on the ability of the mobile communication terminal 30 as in the present embodiment. With this configuration, transmission of an unnecessary control signal can be prevented even more reliably. It is also possible to prevent an error in the mobile communication terminal 30 due to transmission of a control signal to a mobile communication terminal that is unable to execute function control.

Although in the present embodiment the control device 1 includes the control server 10 and the EIR 20, the control device 1 may not include two devices but may be configured only with the control server 10, in which case the information stored in the EIR 20 is stored in the control server 10. In other words, the function of a database may be included in the control server 10.

### Reference Signs List

1... control device, 10... control server, 11... control request accepting unit, I2... determination unit, 13... control signal transmission unit, 101... CPU, 102... RAM, 103... ROM, 104... communication module, 105... auxiliary storage device, 20... EIR, 30.., mobile communication terminal, 40... input server.

## Claims

1. A control device comprising:
a database storing terminal information for identifying a mobile communication terminal and module information for identifying a subscriber authentication module installed in a mobile communication terminal in association with each other;
control request accepting means for accepting a request for function control on a mobile communication terminal serving as a control target, the request including the terminal information of the mobile communication terminal and the module information of the subscriber authentication module;
determination means for determining whether a combination of the terminal information and the module information included in the request for the function control accepted by the control request accepting means is stored in the database; and
control signal transmission means for transmitting a control signal for performing the function control to the mobile communication terminal related to the request for the function control accepted by the control request accepting means, depending on a determination by the determination means.

2. The control device according to claim 1, wherein the database stores information related to location registration of a mobile communication terminal as information associated with the terminal information and the module information.

3. The control device according to claim 1 or 2, wherein when determining that a combination of the terminal information and the module information included in the request for the function control accepted by the control request accepting means is not stored in the database, the determination means stores the combination of the terminal information and the module information, and determines again whether the combination of the terminal information and the module information is stored in the database.

4. The control device according to any one of claims 1 to 3, wherein the determination means stores information indicating ability of a mobile communication terminal in association with the terminal information in advance, and further determines whether the mobile communication terminal related to the request for the function control has the ability to execute function control, based on the terminal information included in the request for the function control.

5. A control method performed by a control device that includes a database storing terminal information for identifying a mobile communication terminal and module information for identifying a subscriber authentication module installed in a mobile communication terminal in association with each other, the control method comprising the steps of:
accepting a control request for accepting a request for function control on a mobile communication terminal serving as a control target, the request including the terminal information of the mobile communication terminal and the module information of the subscriber authentication module;
determining whether a combination of the terminal information and the module information included in the request for the function control accepted in the step of accepting the control request is stored in the database; and
transmitting a control signal for performing the function control to the mobile communication terminal related to the request for the function control accepted in the step of accepting the control request, depending on a determination in the step of determining.
